# FASCICULE DE BREVET EUROPEEN

(11) **EP 1 176 086 B1**
(45) Date de publication et mention de la délivrance du brevet: **11.05.2005**
(21) Numéro de dépôt: 01401998.8
(22) Date de dépôt: 25.07.2001
(51) Int. Cl.: B62D 53/06, B62D 21/00, B62D 21/20

(54) **Châssis à soudures réduites, longeron pour un tel châssis et procédé de fabrication d'un tel longeron**
Rahmen mit einer reduzierten Anzahl von Schweissnähten, Langsträger für einen solchen Rahmen, und dessen Herstellungsverfahren
Frame with a reduced number of welds, bearer for such a chassis, and process for making such a bearer

(30) Priorité: 25.07.2000 FR 0009740
(43) Date de publication de la demande: 30.01.2002
(73) Titulaire: General Trailers France, 91130 Ris Orangis (FR)
(72) Inventeur: Gressier, Christophe, 59251 Allennes les Marais (FR)
(74) Mandataire: Michelet, Alain

(56) Documents cités:
- US-A- 2 277 616
- US-A- 3 612 569
- US-A- 5 210 921
- US-A- 5 242 185
- US-A- 5 718 048
- US-A- 5 725 247

## Description

L'invention concerne un châssis à soudures réduites, un longeron pour un tel châssis et un procédé de fabrication d'un tel longeron.

L'invention concerne plus particulièrement un châssis à soudures réduites pour un véhicule utilitaire. Selon les caractéristiques du préambule des revendications 1 et 11, connues de US-A-3 612 569.

Les châssis de véhicules utilitaires sont pour la plupart constitués de deux poutres longitudinales, appelées longerons, entretoisés au moyen de traverses. Sur ces longerons, on dispose un plancher de chargement, appelé aussi plateau, une citerne, une benne, un caisson ou un container. Pour les châssis de camion, on utilise en général des longerons ayant une section constante, par exemple en I.

Contrairement à cela, les longerons de châssis de semi-remorques et de remorques n'ont souvent pas une section constante sur toute leur longueur. Des formes variées de longeron sont ainsi fabriquées. Selon une technique utilisée jusqu'à maintenant, les différentes formes de longeron en I sont obtenues en découpant dans une tôle une âme de longeron selon la forme souhaitée et en soudant sur les bords longitudinaux opposés de cette tôle des bandes destinées à former les ailes des longerons. En variante de cela, les ailes des longerons sont formées par des profilés en T, partiellement cintrés, constitués par des bandes pourvues de nervures centrales suffisamment hautes pour pouvoir éloigner les soudures des ailes, c'est-à-dire des lieus de la plus forte sollicitation. Des longerons de formes variées sont obtenus de manière correspondante. Ainsi, par exemple, un longeron en J, c'est-à-dire un longeron ayant deux ailes disposées symétriquement, par rapport à son âme, sur un bord de l'âme et une aile unique disposée d'un côté de l'âme sur l'autre bord de l'âme, est obtenu en utilisant une bande pourvue d'une nervure centrale et une bande sans une telle nervure centrale.

Quelle que soit la conception des longerons utilisés jusqu'à maintenant, leur assemblage par soudage a deux désavantages majeurs.

Tout d'abord, le soudage nécessite parfois deux passages de soudage pour chaque aile, soit un passage de part et d'autre de l'âme du longeron sur toute la longueur de celui-ci. Ensuite, le soudage entraîne une altération de la structure métallurgique des éléments assemblés et notamment une réduction de la tenue en fatigue du longeron obtenu. En même temps, les contraintes de la technique de soudage et du choix du matériau pouvant être soudé, empêchent les constructeurs de châssis pour véhicules utilitaires de réduire l'épaisseur des tôles utilisées et d'obtenir ainsi une réduction du poids du véhicule.

Le but de l'invention est de réaliser un châssis, et notamment un châssis constitué de deux longerons de section non constante reliés entre eux par des traverses, de façon que le nombre de passages de soudage et la longueur des cordons de soudure soient réduits.

De plus, l'invention cherche à réduire le poids du véhicule utilitaire.

Le but de l'invention est atteint par un châssis à soudures réduites comprenant deux longerons formés chacun à partir d'un profilé unique de hauteur constante, présentant une âme s'étendant dans un plan défini par une hauteur et une longueur du longeron et deux ailes, l'âme de chaque longeron présentant une partie ayant la hauteur initiale du profilé et une partie de hauteur réduite.

Conformément à l'invention, l'aile et l'âme de chaque longeron sont réunis par une soudure obtenue par soudage par friction et qui s'étend sur l'âme sensiblement dans le sens de la longueur du longeron et essentiellement uniquement dans la partie de hauteur réduite.

Dans le cadre de la présente invention, un profilé est un élément extrudé ayant une section transversale constante sur sa longueur entière. Du fait d'être réalisé par extrusion, cet élément est exempt de soudures.

Le châssis selon l'invention est appelé " à soudures réduites " tout d'abord du fait que les longerons utilisés sont réalisés chacun à partir de profilés définis ci-avant. Ces profilés ont donc initialement une hauteur constante sur leur longueur entière.

Cependant, pour fabriquer un châssis de semi-remorque, les longerons doivent être formés avec au moins une partie de hauteur réduite, c'est-à-dire avec une partie du longeron dont la hauteur est moins grande que la hauteur initiale du profilé utilisé pour sa confection. Une telle partie de hauteur réduite s'étend à partir de l'une des deux extrémités du profilé. Cette extrémité est en général celle orientée vers la partie avant du châssis où est montée une cheville ouvrière pour la liaison de la semi-remorque à un tracteur.

Selon une variante, les longerons peuvent également être pourvus d'une seconde partie de hauteur réduite, qui s'étend à partir de l'autre extrémité du profilé ou du longeron et qui répond à des besoins particuliers, par exemple au type de véhicule auquel le châssis est destiné. Un tel besoin pourrait être, par exemple, de placer l'axe de basculement d'une benne en-dessous du niveau défini par les ailes supérieures des deux longerons du châssis, sans que les longerons ne soient perforés pour recevoir cet axe. L'axe est alors monté dans des éléments de montage fixés sur la seconde partie de hauteur réduite.

Il est évidemment concevable d'utiliser des longerons ayant plus que deux parties de hauteur réduite pour des constructions particulières de châssis.

Quel que soit le nombre de parties de hauteur réduite, la technique selon l'invention pour les obtenir, est toujours la même: on pratique une découpe dans l'âme dans la partie du profilé de départ, dont la hauteur doit être réduite, et on ferme cette découpe par cintrage et soudage de l'aile correspondante, comme cela sera décrit plus en détail dans la description d'un exemple de réalisation.

Le longeron ainsi obtenu à partir d'un profilé ne comporte donc dans la ou dans chacune des parties de hauteur réduite qu'une seule soudure. D'autres soudures, éventuellement nécessaires pour la fixation d'accessoires dans une telle partie de hauteur réduite, ne sont pas prises en considération dans le cadre de la présente invention.

La disposition selon laquelle la soudure s'étend sur l'âme du longeron signifie que la soudure réunissant l'aile et l'âme ne s'étend pas à la jonction du bord de l'âme avec l'aile correspondante, mais à une distance prédéterminée de et parallèlement à celle-ci; cette disposition est généralement nécessaire pour éloigner la soudure, et la zone d'affaiblissement qu'elle implique, de la zone de la plus grande sollicitation du longeron. A cette fin, la découpe dans l'âme, du côté de l'aile à cintrer, n'est pas effectuée au bord de l'âme, mais parallèlement à celui-ci.

Toutefois, si l'on assemble l'âme et l'aile, dans la partie de hauteur réduite du longeron à créer, par soudage par friction, il est bien possible de placer la soudure, toujours sur l'âme, mais au bord de celle-ci, puisque ce type de soudage n'affaiblit pas, comparé à un soudage MIG ou TIG, la structure métallurgique du profilé.

Par ailleurs, la disposition selon laquelle la soudure s'étend essentiellement uniquement dans la partie de hauteur réduite de celui-ci, signifie que la soudure ne s'arrête pas à une ligne fictive séparant la partie de hauteur réduite du profilé de la partie ayant la hauteur initiale, mais qu'elle s'étend encore quelques centimètres au-delà de cette ligne fictive dans la partie adjacente pour des raisons techniques de soudage et notamment pour assurer une soudure parfaite sur la longueur entière de la partie de hauteur réduite; le dépassement de cette ligne fictive étant entièrement dû au fait du soudage, et ne pouvant être indiqué par aucune caractéristique particulière, notamment mesurable, la formulation "essentiellement uniquement " indique que la soudure continue au-delà de la partie de hauteur réduite, le moins loin possible dans la partie de hauteur initiale, mais sans autre précision.

L'invention concerne également les caractéristiques ci-après, considérées isolément ou selon toutes leurs combinaisons techniquement possibles:
- les longerons sont délimités en hauteur, dans la partie de hauteur réduite, par un bord rectiligne aligné avec le bord correspondant de la partie de hauteur initiale et par un bord comportant une partie courbe dans la sens de la norme française ISO 1726 (Liaisons mécaniques entre tracteurs et semi-remorques) ou une partie de toute autre forme, mais non aligné avec le bord correspondant de la partie de hauteur initiale ; dans le cadre de la présente description, le terme " bord du longeron " désigne indifféremment l'aile et les ailes, inférieures et supérieures, d'un longeron en I ou en J ; ce qui importe ici, c'est la forme du longeron en vue latérale ;
- chacun des longerons est pourvu de deux parties de hauteur réduite; chaque partie s'étend respectivement à partir de l'une ou de l'autre des deux extrémités du longeron vers l'intérieur du longeron ;
- chacun des longerons est pourvu de deux parties de hauteur réduite dont les bords rectilignes ne sont pas alignés avec le même bord de la partie de hauteur initiale ;
- les deux longerons sont pourvus, à leur bord inférieur, d'une aile s'étendant à partir de l'âme correspondante, l'une vers l'autre; cette disposition permet de construire des châssis non pas à partir de profilés en I, mais à partir de profilés de J, comme cela sera décrit plus en détail dans la description d'un mode de réalisation de l'invention ;
- le châssis est pourvu de mains de suspension fixées aux longerons par des rivets ;
- le châssis comprend des traverses hydroformées reliant les longerons entre eux ;
- les traverses hydroformées sont fixées aux longerons par des rivets dont au moins quelques uns servent en même temps à la fixation des mains de suspension.

L'invention concerne également un longeron pour un châssis à soudures réduites, formé à partir d'un profilé de hauteur initiale constante présentant une âme qui s'étend dans un plan défini par une hauteur et une longueur du longeron, et deux ailes. L'âme présente une partie ayant la hauteur initiale du profilé et une partie de hauteur réduite.

L'invention concerne également un longeron ayant une ou plusieurs caractéristiques supplémentaires suivantes, considérées isolément ou selon toutes leurs combinaisons techniquement possibles:
- l'aile et l'âme sont réunis par une soudure unique obtenue par soudage par friction et s'étendant sur l'âme sensiblement dans le sens de la longueur du longeron et essentiellement uniquement dans la partie de hauteur réduite ;
   la soudure par friction est effectuée soit par l'utilisation de deux têtes de friction montées en tête bêche et appliquées de part et d'autre de l'âme du profilé ou par l'utilisation d'une seule tête appliquée d'un seul côté en pleine pénétration ;
- le longeron est délimité en hauteur, dans la partie de hauteur réduite, par un bord rectiligne aligné avec le bord correspondant de la partie de hauteur initiale et par un bord comportant une partie courbe ou une partie de toute autre forme, mais non aligné avec le bord correspondant de la partie de hauteur initiale, comme cela est décrit plus haut ;
- la soudure unique suit le bord au moins partiellement courbe.

L'invention concerne également un procédé de fabrication d'un longeron pour un châssis à soudures réduites à partir d'un profilé présentant une âme qui s'étend dans un plan défini par une hauteur et une longueur du longeron et au moins une aile.

Conformément à l'invention, on pratique dans une partie du profilé qui doit devenir une partie de hauteur réduite du longeron, une découpe de l'âme, on rapproche ensuite les deux parties de l'âme par cintrage de l'une des deux et on réunit ces parties de l'âme par une soudure unique obtenue par soudage par friction, la soudure unique s'étendant sur l'âme sensiblement dans le sens de la longueur du longeron et essentiellement uniquement dans la partie de hauteur réduite.

D'autres caractéristiques et avantages de l'invention ressortiront de la description d'un mode de réalisation ci-après en référence aux dessins. Dans ces dessins:
Les Figures 1a et 1b montrent, en vue latérale, un profilé à partir duquel un longeron pour un châssis selon l'invention peut être obtenu, et un longeron résultant.
Les Figures 2a et 2b montrent le longeron de la Figure 1b en deux coupes transversales IIA-IIA et IIB-IIB indiquées dans la Figure 1b.
La Figure 3 montre, en une vue arrière, les deux longerons d'un châssis selon l'invention.
Les Figures 4 et 5 montrent, en deux perspectives différentes, une main de suspension selon une première conception utilisable dans un châssis selon l'invention.
Les Figures 6 et 7 montrent une seconde version d'une main de suspension utilisable dans un châssis selon l'invention, et
La Figure 8 montre, en perspective, un châssis selon l'invention.

Les longerons 1, 2 d'un châssis à soudures réduites selon l'invention sont formés à partir de profilés dont chacun présente une âme 10 s'étendant dans un plan défini par une hauteur H et une longueur L du longeron et deux ailes 3, 4.

En général, de tels profilés ont une section en I. Ils peuvent également avoir une section en C ou en J, selon la disposition des ailes du longeron par rapport au plan médian de l'âme du longeron. Pour des raisons expliquées plus loin, ces profilés en J sont préférés. Cependant, cette préférence est indépendante du principe de la présente invention, n'en limite donc pas la portée et n'a notamment pas d'influence sur la mise en oeuvre du procédé décrit plus loin, par la mise en oeuvre duquel des longerons pour un châssis selon l'invention sont obtenus.

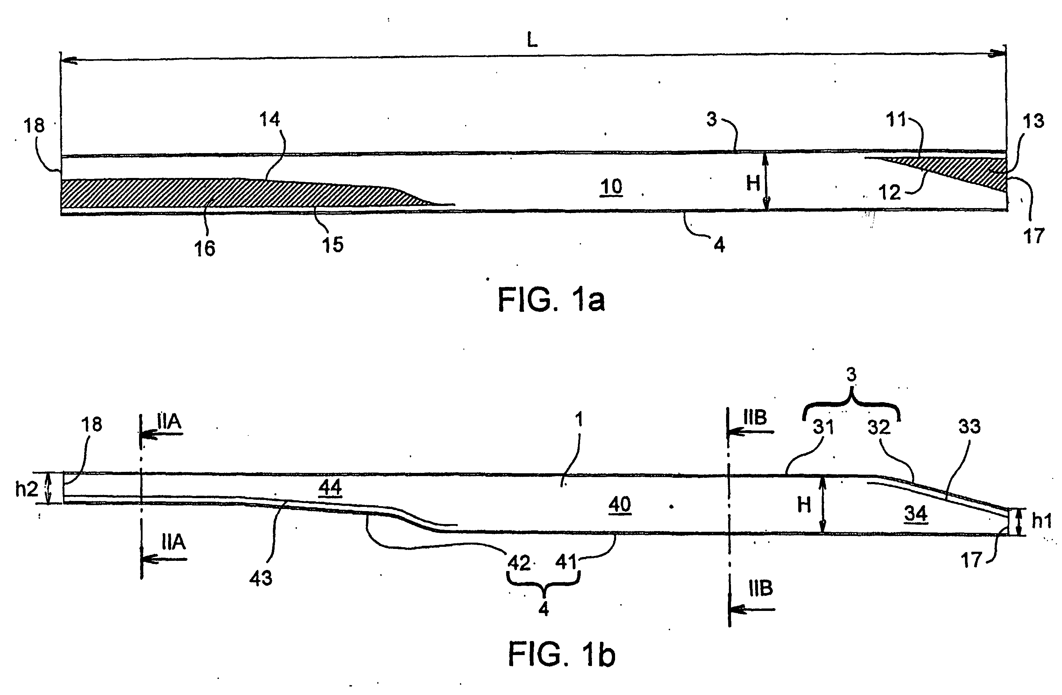

En effet, pour transformer un profilé en un longeron selon le principe de la présente invention, des incisions convergentes 14 et 15 sont appliquées à l'âme 10 à partir de celle des deux extrémités du profilé qui doit être orientée vers l'avant du châssis, pour y former le col de cygne. Cette extrémité est référencée 18. Dans le mode de réalisation représenté sur les Figures 1a et 1b, deux autres incisions convergentes 11 et 12 sont appliquées à l'âme 10 à partir de l'autre extrémité du profilé, référencée 17, pour donner à l'arrière du châssis une forme particulière nécessaire pour certaines applications. Il va sans dire que cette variante est optionnelle et qu'elle ne modifie en rien le principe de la présente invention.

Les incisions convergentes 11 et 12 résultent en une découpe 13 de forme essentiellement triangulaire, étant précisé que l'incision 11 est faite parallèlement au bord supérieur de l'âme 10, c'est-à-dire à faible distance de l'aile 3.

Les incisions convergentes 14 et 15 résultent en une découpe 16 de forme allongée et finissant en pointe. Ici, l'incision 15 est faite à faible distance et parallèlement au bord inférieur de l'âme 10, c'est-à-dire parallèlement à l'aile 4 du profilé. L'incision 14 est faite à une certaine distance de l'incision 15 et parallèlement à cette dernière dans un premier temps, en se déplaçant longitudinalement, et ensuite d'abord légèrement et finalement fortement convergente avec l'incision 15.

Lorsque ces deux découpes sont faites et le matériau découpé enlevé, les parties de l'âme résiduelles à l'une et à l'autre des deux extrémités du profilé sont rapprochées les unes aux autres par cintrage et assemblées par soudage.

Plus précisément, la partie résiduelle de l'âme 10 délimitée par l'aile 3 et la ligne d'incision 11 du côté de l'extrémité 17 est rapprochée à la partie résiduelle de l'âme 10, délimitée par l'aile 4 et la ligne d'incision 12, par cintrage. Lorsque ces deux parties résiduelles sont ainsi pressées l'une contre l'autre, elles sont soudées par friction.

De manière correspondante, la partie résiduelle de l'âme 10 délimitée entre l'aile 4 et la ligne d'incision 15 est rapprochée à la partie résiduelle de l'âme 10, délimitée par l'aile 3 et la ligne d'incision 14, et les deux parties résiduelles sont pressées l'une contre l'autre et soudées par friction.

L'application du soudage par friction à l'assemblage de l'aile et la partie résiduelle de l'âme s'est avérée particulièrement avantageuse, lorsqu'il s'agit de travailler des profilés en aluminium.

En effet, certains alliages d'aluminium tels que, par exemple, l'alliage 7075 (désignation selon la classification standardisée ISO) sont appréciés pour leurs caractéristiques mécaniques élevées obtenues après précipitation structurale de phases MgZn2. Cependant, de tels alliages ayant été réputés jusqu'à présent insoudables, ils n'ont pas été utilisés dans la construction de structures mécano-soudées telles que des châssis de véhicules utilitaires.

Les deux caractéristiques mécaniques les plus importantes pour une application telle la construction de châssis de véhicules utilitaires, à savoir la charge à la rupture Rm minimale et la limite d'élasticité RpO,2 minimale, sont indiquées dans le tableau ci-après pour quelques alliages.

| ALLIAGE | Charge à la rupture Rm minimale | Limite d'élasticité RpO,2 minimale |
|---|---|---|
| 6082 | 310 | 260 |
| 7003 | 350 | 290 |
| 7005 | 350 | 290 |
| 7020 | 350 | 290 |
| 7022 | 490 | 420 |
| 7049 | 610 | 530 |
| 7075 | 530 | 460 |

Une autre caractéristique importante pour le châssis selon l'invention, et plus particulièrement pour les longerons fabriqués selon l'invention, est la tenue en fatigue. D'après les essais effectués sur des assemblages en alliage 7075 soudés par friction, dont les résultats ont été utilisés dans la méthode de BASTENAIRE pour estimer la limite d'endurance à deux millions de cycles, la limite d'endurance peut être estimée pour cet alliage à environ 150 - 170 MPa, comparée à une valeur voisine de 100 MPa pour un alliage de la série 6000. Les valeurs 150 - 170 MPa sont proches de celles que l'on peut obtenir sur le métal de base, c'est-à-dire non affecté thermiquement. De plus, ce résultat a été confirmé par des examens de rupture: la rupture s'est toujours produite dans le métal de base.

Le longeron résultant de la modification du profilé, tel que décrit ici avant, présente ainsi une âme essentiellement en trois parties reparties longitudinalement, à savoir une partie 40 ayant la hauteur totale H, une première partie 34 de hauteur réduite dont la hauteur hl décroît de la partie 40 jusqu'à l'extrémité 17 du longeron pour y atteindre sa valeur minimale, et une seconde partie 44 de hauteur réduite dont la hauteur h2 décroît à partir de la partie 40 vers l'extrémité 18, d'abord rapidement et ensuite moins rapidement et restant finalement constante jusqu'à l'extrémité 18.

L'aile 3 se divise en conséquence en une partie rectiligne 31 et une partie partiellement courbe 32, alors que l'aile 4 se divise en une partie rectiligne 41 et une partie partiellement courbe 42. La partie 33 de l'aile 3, par rapport à laquelle la soudure unique 33 de cette première partie de hauteur réduite de l'âme est conduite en parallèle, forme, avec une partie correspondante du second longeron d'un châssis selon l'invention, une partie du longeron dont la hauteur est réduite pour pouvoir monter, par exemple, un axe de basculement 90 avec ses éléments de montage 91, pour une benne basculante de façon que cet axe 90 soit situé en dessous du niveau défini par la partie 31 de l'aile 3 des longerons.

Contrairement à cela, la partie 42 de l'aile 4 à laquelle la soudure unique 43 de la seconde partie de hauteur réduite 44 est conduite parallèlement, constitue la face inférieure du longeron dans la partie avant du châssis, c'est-à-dire dans la partie pourvue d'une cheville ouvrière pour le couplage d'une semi-remorque à un tracteur.

Comme cela est représenté sur la Figure Ib, la partie en courbe 32 délimitant, sur un côté, la partie 34 de hauteur réduite et la partie partiellement courbe 42 délimitant, sur un côté, la seconde partie 44 de hauteur réduite, n'appartiennent pas au même bord 3 ou 4 du longeron.

Le longeron peut aussi être conçu de façon que la première partie 34 de hauteur réduite puisse être réalisée de façon que la partie partiellement courbe délimitant cette première partie de hauteur réduite et la partie 42 délimitant la seconde partie de hauteur réduite, appartiennent toutes les deux à l'aile 4. Une telle conception peut être utile, par exemple, pour alléger le châssis et, en conséquence, le véhicule ou pour pouvoir fixer des accessoires sous les longerons.

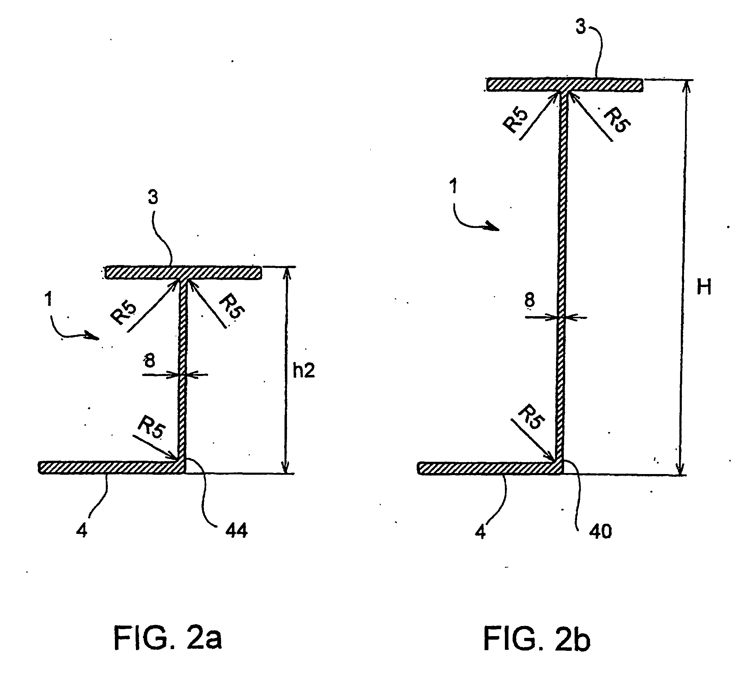

Les Figures 2a et 2b montrent le longeron obtenu en deux sections transversales référencées respectivement IIA-IIA et IIBIIB, à des endroits indiqués sur la Figure Ib.

Les Figures 2a et 2b montrent par ailleurs la disposition des ailes 3 et 4 qui donnent au profilé la désignation profilé en J.

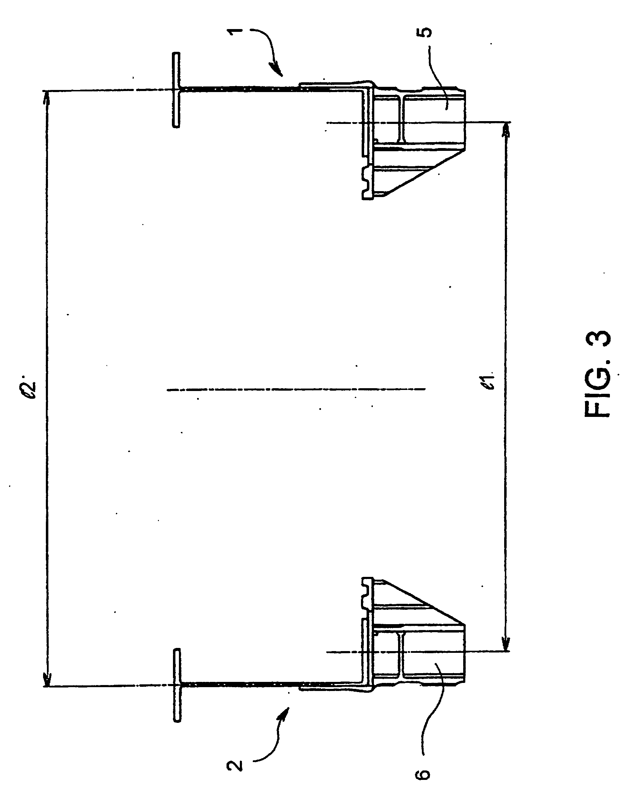

La Figure 3 représente, en une vue arrière simplifiée, les deux longerons 1, 2 et des mains de suspension 5, 6 fixées respectivement sur l'un et sur l'autre des deux longerons d'un châssis selon l'invention. Bien que la sélection de longerons formés à partir de profilés en J soit indépendante du principe de l'invention et bien que, à l'inverse, le principe de l'invention soit indépendant du type de profilé à partir duquel le longeron pour un châssis selon l'invention est obtenu, la Figure 3 souligne néanmoins le mieux les avantages de l'utilisation de longerons préparés selon l'invention.

En effet, l'utilisation de profilés en J à la place de profilés en I permet de donner une assise plus large au plateau ou à tout autre équipement que l'on veut fixer sur le châssis. Plus particulièrement, cette disposition assure une meilleure stabilité au bennage et en circulation. Une différence de 15 à 20 cm entre une largeur I1 dont on disposerait en cas d'utilisation de profilé en I et une largeur I2 dont on dispose en utilisant des profilés en J est tout à fait faisable.

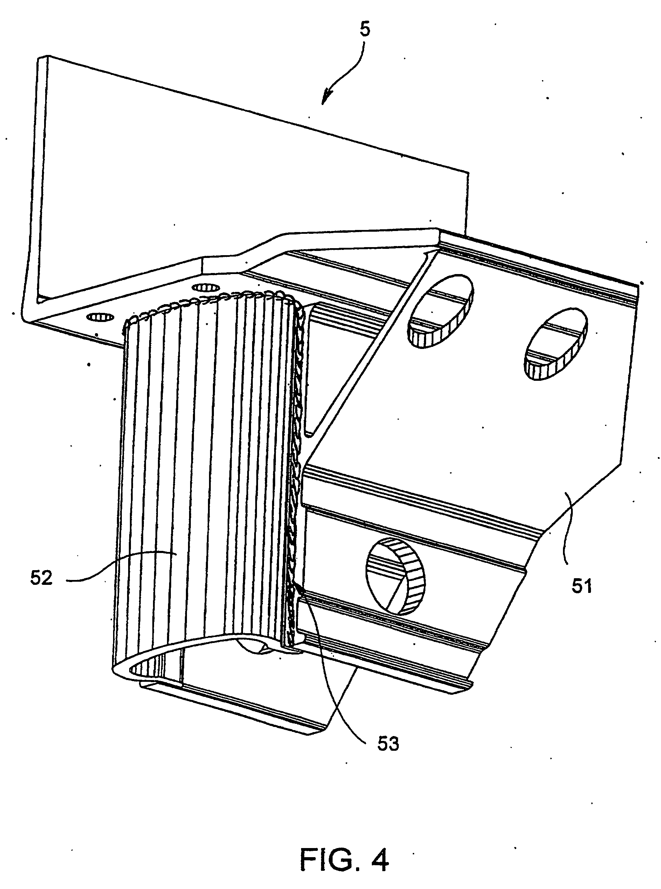

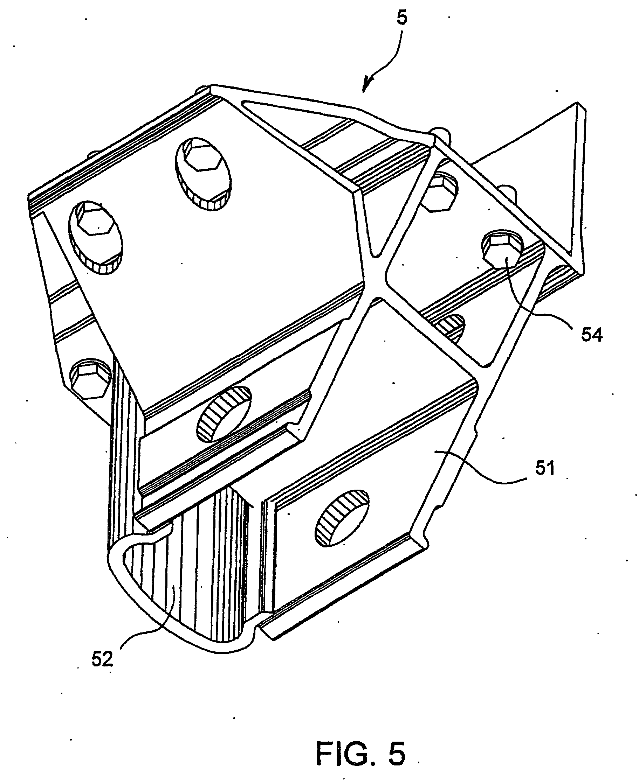

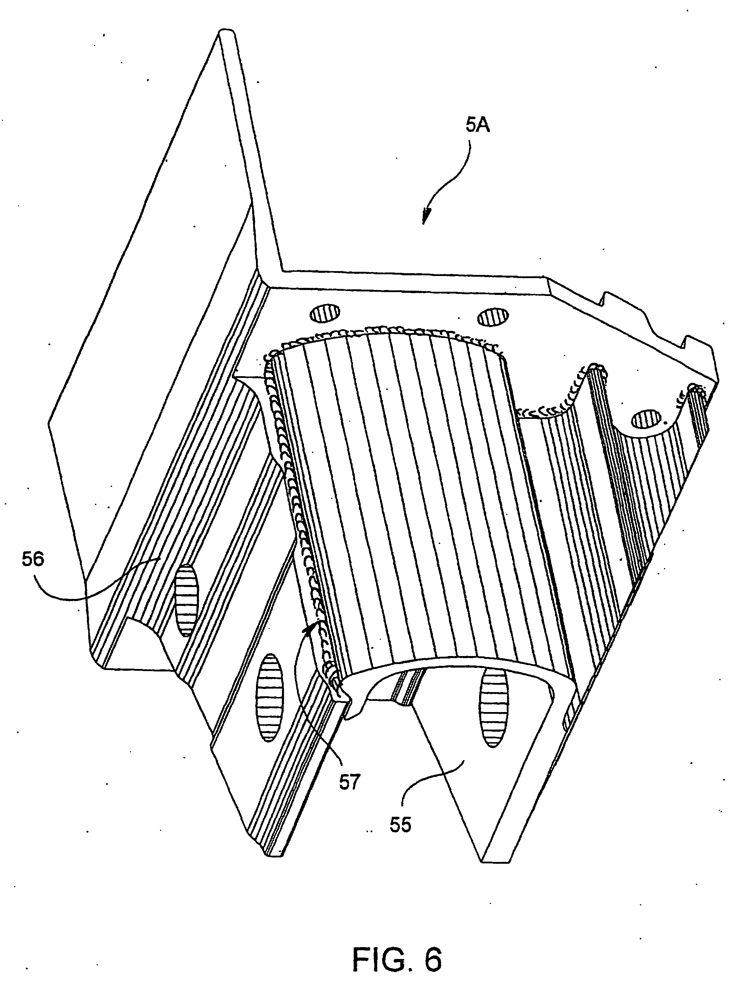

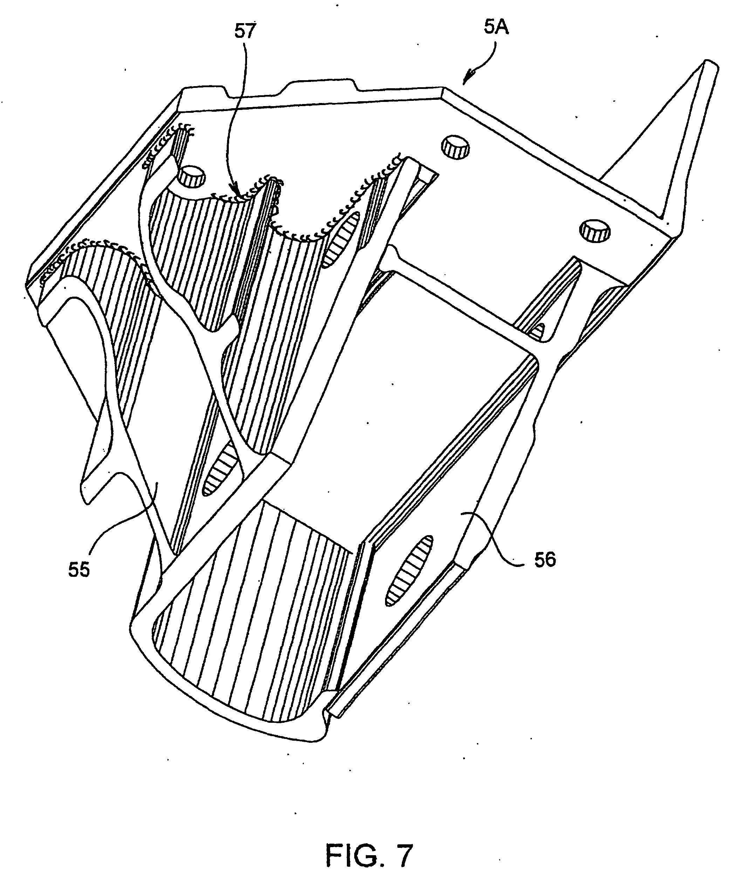

Les Figures 4 et 5, d'une part, et les Figures 6 et 7, d'autre part, montrent en des perspectives complémentaires, deux mains de suspension 5 et 5A obtenues à partir de profilés selon deux versions différentes.

La première version, la main de suspension 5, représentée sur les Figures 4 et 5 est obtenue à partir d'un profilé 51 extrudé de section complexe, complété et partiellement rigidifié par un profilé 52 en C. Le profilé complémentaire 52 est soudé sur le profilé 51 par une soudure continue 53 comme cela est représenté sur la Figure 4. La main de suspension 5 ainsi réalisée peut être fixée sur les longerons, par exemple, au moyen de boulons 54.

La seconde version, la main de suspension 5A, représentée sur les Figures 6 et 7 est obtenue à partir de deux profilés 55 et 56. Ces deux profilés sont des profilés extrudés de sections complexes. Ils sont découpés comme cela est représenté sur les Figures 6 et 7 et assemblés moyennant une soudure continue 57 comme cela est représenté sur la Figure 6, et en complément sur la Figure 7. La main de suspension 5A ainsi réalisée peut être fixée sur un longeron moyennant des boulons.

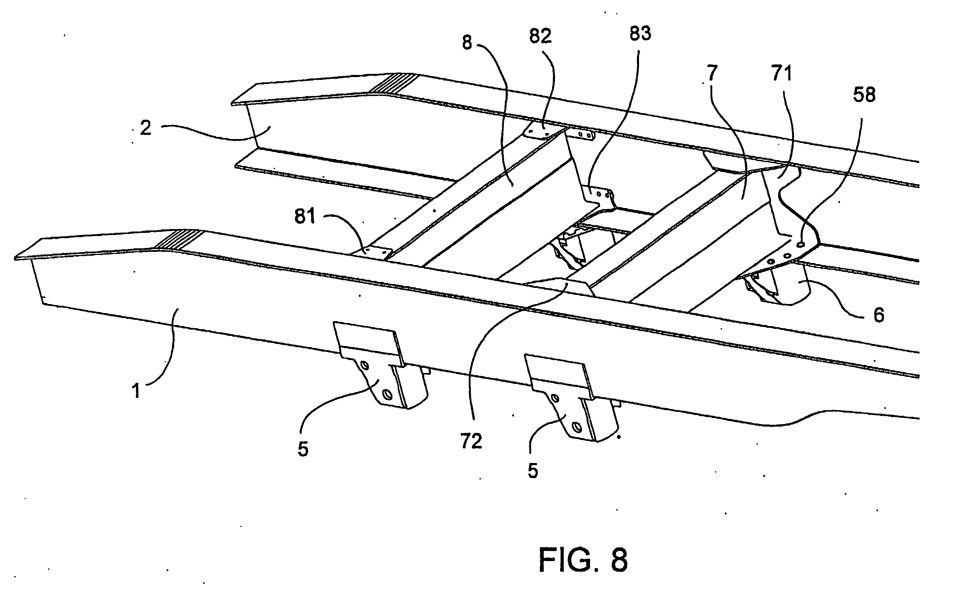

En variante, pour des raisons exposées ci-après, la main de suspension 5A, tout comme la main de suspension 5, est avantageusement attachée au longeron moyennant des rivets 58.
En complément de l'utilisation de longerons ayant une soudure unique dans une partie de hauteur réduite, le châssis à soudures réduites selon l'invention est avantageusement équipé de traverses hydroformées 61, comme cela est représenté sur la Figure 8. Des pièces telles une traverse réalisée en une seule pièce par hydroformage présente l'avantage d'être exempte de soudures. Ainsi, en utilisant des traverses hydroformées 7 formées avec des extrémités 71 et 72 adéquates pour être insérées dans et assemblées avec un longeron 1, 2, et en utilisant des rivets 58 pour fixer les traverses 7 sur les longerons 1 et 2, on contribue, de manière supplémentaire, à la mise en oeuvre du principe de l'invention selon lequel on utilise le moins de soudures possibles. Avantageusement, les rivets 58 sont disposés de façon à pouvoir, en partie au moins, servir à la fois à la fixation sur le longeron correspondant, d'une traverse 7 par l'une ou l'autre de ses extrémités 71, 72 et d'une main de suspension 5, 6.

Comme la Figure 8 le représente également, il est néanmoins possible d'utiliser des traverses 8 complétées par des éléments de montage 81 à 83 et un élément non représenté, la fixation sur l'un et l'autre des longerons étant obtenue au moyen de rivets 58.

## Revendications

1. Châssis à soudures réduites comprenant deux longerons (1, 2) formés chacun à partir d'un profilé unique de hauteur initiale constante, présentant une âme (10) s'étendant dans un plan défini par une hauteur et une longueur du longeron et deux ailes (3, 4), l'âme (10) de chaque longeron présentant une partie (40) ayant la hauteur initiale du profilé et une partie (34, 44) de hauteur réduit, **caractérisé en ce que** l'une ou l'autre des ailes (3, 4) et l'âme (10) sont réunis par une soudure (33, 43) obtenue par soudage par friction et qui s'étend sur l'âme sensiblement dans le sens de la longueur du longeron (1, 2) et essentiellement uniquement dans la partie de hauteur réduite.

2. Châssis selon la revendication 1 dont les longerons présentent, dans la partie de hauteur réduite, un bord rectiligne (31, 41) aligné avec le bord correspondant de la partie de hauteur initiale et un bord (32, 42) comportant une partie courbe ou ayant toute autre forme, mais non aligné avec le bord correspondant de la partie de hauteur initiale, **caractérisé en ce que** la soudure (33, 47) suit le bord au moins partiellement courbe (32, 42) à faible distance de l'aile.

3. Châssis selon la revendication 1 ou 2, **caractérisé en ce que** chacun des longerons est pourvu de deux parties (34, 44) de hauteur réduite s'étendant respectivement à partir de l'une et de l'autre des deux extrémités (17, 18) du longeron (12) vers l'intérieur du longeron.

4. Châssis selon l'une quelconque des revendications 1 à 3, **caractérisé en ce que** chacun des longerons est pourvu de deux parties (34, 44) de hauteur réduite dont les bords rectilignes (31, 41) ne sont pas alignés avec le même bord (3 ou 4) de la partie de hauteur initiale du longeron (1, 2).

5. Châssis selon l'une quelconque des revendications précédentes, **caractérisé en ce que** chacun des deux longerons (1, 2) est pourvu à son bord inférieur d'une aile (4) s'étendant à partir de l'âme correspondante vers l'autre longeron.

6. Châssis selon l'une quelconque des revendications précédentes, **caractérisé en ce qu'**il est pourvu de mains de suspension (5, 6) fixées aux longerons (1, 2) par des rivets (58).

7. Châssis selon l'une quelconque des revendications précédentes, **caractérisé en ce qu'**il comprend des traverses hydroformés (7) reliant les longerons (1, 2) entre eux.

8. Châssis selon la revendication 7, **caractérisé en ce que** les traverses hydroformées (7) sont fixées aux longerons par des rivets (8) dont au moins quelques uns servent en même temps à la fixation des mains de suspension (5, 6).

9. Longeron pour un châssis à soudures réduites, formé à partir d'un profilé unique de hauteur initiale constante, présentant une âme (10) s'étendant dans un plan défini par une hauteur et une longueur du longeron, et deux ailes (3, 4), l'âme (10) présentant une partie (40) ayant la hauteur initiale du profilé et une partie (34, 44) de hauteur réduite, **caractérisé en ce que** l'une ou l'autre des ailes (3 ou 4) et l'âme (10) sont réunies par une soudure (33, 43) obtenue par soudage par friction et qui s'étend sur l'âme sensiblement dans le sens de la longueur du longeron (1, 2) et essentiellement uniquement dans la partie de hauteur réduite.

10. Longeron selon la revendication 9, présentant dans la partie de hauteur réduite (34, 44), partie de hauteur réduite (34, 44), un bord rectiligne (31, 41) et un bord (32, 42) au moins partiellement courbe ou ayant toute autre forme, mais non aligné avec le bord correspondant de la partie de hauteur initiale, **caractérisé en ce que** la soudure (33, 43) suit le bord au moins partiellement courbe (32, 42).

11. Procédé de fabrication d'un longeron pour un châssis à soudures réduites à partir d'un profilé unique présentant une âme (10) qui s'étend dans un plan défini par une hauteur et une longueur du longeron et au moins une aile (3, 4), **caractérisé en ce que** l'on pratique dans une partie du profilé qui doit devenir une partie de hauteur réduite du longeron, une découpe de l'âme, **en ce que** l'on rapproche ensuite les deux parties de l'âme par cintrage de l'une des deux et **en ce que** l'on réunit ces parties de l'âme par une soudure unique obtenue par soudage par friction et qui s'étend sur l'âme sensiblement dans le sens de la longueur du longeron et essentiellement uniquement dans la partie de hauteur réduite.

## Patentansprüche

1. Rahmen mit einer reduzierten Anzahl von Schweißnähten mit zwei Längsträgern (1, 2), die jeweils ausgehend von einem einzigen Profil mit einer anfänglich konstanten Höhe hergestellt sind, das einen Steg (10), der sich in einer Ebene erstreckt, die durch die Höhe und die Länge des Längsträgers gebildet ist, sowie zwei Schenkel (3, 4) aufweist, wobei der Steg (10) jedes Längsträgers einen Abschnitt (40) aufweist, der die ursprüngliche Höhe des Profils hat, und einen Abschnitt (34, 44) mit reduzierter Höhe,
**dadurch gekennzeichnet, dass**
der eine oder der andere Schenkel (3, 4) und der Steg (10) mittels einer Schweißnaht (33, 43), die durch Reibschweißen erhalten wird, verbunden sind, und die sich im Wesentlichen entlang der Längsrichtung des Längsträgers (1, 2) und im Wesentlichen ausschließlich im Abschnitt reduzierter Höhe erstreckt.

2. Rahmen nach Anspruch 1, dessen Längsträger im Abschnitt reduzierter Höhe einen geraden Bereich (31, 41) hat, der mit dem entsprechenden Bereich des Abschnitts ursprünglicher Höhe fluchtet, und einen Bereich (32, 42) hat, der einen gekrümmten Abschnitt oder jede andere Form hat, jedoch nicht fluchtend mit dem entsprechenden Bereich des Abschnitts ursprünglicher Höhe,
**dadurch gekennzeichnet, dass**
die Schweißnaht (33, 47) dem wenigstens teilweise gekrümmten Bereich (32, 42) in geringem Abstand vom Schenkel folgt.

3. Rahmen nach Anspruch 1 oder 2,
**dadurch gekennzeichnet, dass**
jeder der Längsträger zwei Abschnitte (34, 44) reduzierter Höhe aufweist, die sich jeweils von dem einen und dem anderen der beiden Enden (17, 18) des Längsträgers (1, 2) aus ins Innere der Längsträger erstrecken.

4. Rahmen nach einem der Ansprüche 1 bis 3,
**dadurch gekennzeichnet, dass**
jeder der beiden Längsträger zwei Abschnitte (34, 44) reduzierter Höhe aufweist, deren gerade Bereiche (31, 41) nicht mit dem gleichen Bereich (3 oder 4) des Abschnitts ursprünglicher Höhe des Längsträgers (1, 2) fluchten.

5. Rahmen nach einem der vorhergehenden Ansprüche,
**dadurch gekennzeichnet, dass**
jeder der beiden Längsträger (1, 2) an seinem unteren Rand einen Schenkel (4) aufweist, der sich ausgehend vom Steg (10) zum anderen Längsträger erstreckt.

6. Rahmen nach einem der vorhergehenden Ansprüche,
**dadurch gekennzeichnet, dass**
er mit Befestigungswinkeln (5, 6) versehen ist, die mittels Nieten (58) an den Längsträgern (1, 2) befestigt sind.

7. Rahmen nach einem der vorhergehenden Ansprüche,
**dadurch gekennzeichnet, dass**
er durch Hydroformen gebildete Querträger (7) aufweist, die die Längsträger (1, 2) miteinander verbinden.

8. Rahmen nach Anspruch 7,
**dadurch gekennzeichnet, dass**
die durch Hydroformen gebildeten Querträger (7) an den Längsträgern mittels Nieten (58) befestigt sind, von denen wenigstens einige gleichzeitig der Befestigung der Befestigungswinkel (5, 6) dienen.

9. Längsträger für einen Rahmen mit reduzierter Anzahl von Schweißnähten, der ausgehend von einem einzigen Profil mit einer anfänglichen konstanten Höhe hergestellt ist, das einen Steg (10), der sich in einer Ebene erstreckt, die durch die Höhe und die Länge des Längsträgers gebildet ist, sowie zwei Schenkel (3, 4) aufweist, wobei der Steg (10) jedes Längsträgers einen Abschnitt (40) aufweist, der die ursprüngliche Höhe des Profils hat und einen Abschnitt (34, 44) reduzierter Höhe,
**dadurch gekennzeichnet, dass**
der eine oder der andere Schenkel (3, 4) und der Steg (10) mittels einer Schweißnaht (33, 43) verbunden sind, die durch Reibschweißen erhalten wird, und die sich im Wesentlichen entlang der Längsrichtung des Längsträgers (1, 2) und im Wesentlichen ausschließlich im Bereich reduzierter Höhe erstreckt.

10. Längsträger nach Anspruch 9, der im Abschnitt (34, 44) reduzierter Höhe einen geraden Bereich (31, 41) und einen wenigstens teilweise gekrümmten Bereich oder jede andere Form aufweist, jedoch nicht fluchtend mit dem entsprechenden Bereich des Abschnitts ursprünglicher Höhe,
**dadurch gekennzeichnet, dass**
die Schweißnaht (33, 43) dem wenigstens teilweise gekrümmten Bereich (32, 42) folgt.

11. Verfahren zur Herstellung eines Längsträgers für einen Rahmen mit reduzierter Anzahl von Schweißnähten ausgehend von einem einzigen Profil (10), das einen Steg (10) hat, der sich in einer Ebene erstreckt, die durch die Höhe und die Länge des Längsträgers gebildet ist, sowie wenigstens einen Schenkel (3, 4),
**dadurch gekennzeichnet, dass**
in einem Abschnitt des Profils, der ein Abschnitt reduzierter Höhe des Längsträgers werden soll, ein Stegausschnitt gebildet wird, und dass dann die beiden Abschnitte des Stegs durch Biegen eines der beiden einander angenähert werden, und dass diese Abschnitte des Stegs durch eine einzige Schweißnaht verbunden werden, die durch Reibschweißen erhalten wird und die sich am Steg im Wesentlichen entlang der Längsrichtung des Längsträgers und im Wesentlichen ausschließlich im Abschnitt reduzierter Höhe erstreckt.

## Claims

1. A frame with a reduced number of welds, comprising two girders (1, 2) each formed from a single profile of constant initial height, exhibiting a web (10) extending on a plane delineated by a height and a length of the girder and two wings (3, 4), whereas the web (10) of each girder exhibits a portion (40) having the initial height of the profile and a portion (34, 44) of reduced height, **characterised in that** either of the wings (3, 4) and the web (10) are brought together by a weld (33, 43) obtained by friction welding, and which extends over the web substantially in the direction of the length of the girder (1, 2) and substantially solely in the portion of reduced height.

2. A frame according to claim 1, whereof the girders exhibit, in the portion of reduced height, a rectilinear edge (31, 41) aligned with the corresponding edge of the portion of initial height and an edge (32, 42) comprising a bent portion or having any other shape, but not aligned with the corresponding edge of the portion of initial height, **characterised in that** the weld (33, 47) follows the edge at least partially bent (32, 42) at small distance from the wing.

3. A frame according to claim 1 or 2, **characterised in that** each of the girders is provided with two portions (34, 44) of reduced height extending respectively from either of both ends (17, 18) of the girder (12) towards the inside of the girder.

4. A frame according to anyone of claims 1 to 3, **characterised in that** each of the girders is provided with two portions (34, 44) of reduced height whereof the rectilinear edges (31, 41) are not aligned with the same edge (3 or 4) of the portion of initial height of the girder (1, 2).

5. A frame according to anyone of the previous claims, **characterised in that** each of both girders (1, 2) is provided at its lower edge with a wing (4) extending from the corresponding web towards the other girder.

6. A frame according to anyone of the previous claims, **characterised in that** it is provided with suspension hands (5, 6) fixed to the girders (1, 2) by rivets (58).

7. A frame according to anyone of the previous claims, **characterised in that** it comprises hydroformed cross-pieces (7) linking the girders (1, 2) together.

8. A frame according to claim 7, **characterised in that** the hydroformed cross-pieces (7) are fixed to the girders by rivets (8) whereof at least some of them act simultaneously for fastening suspension hands (5, 6).

9. A girder for a frame with a reduced number of welds, formed from a single profile of constant initial height, exhibiting a web (10) extending on a plane delineated by a height and a length of the girder and two wings (3, 4), whereas the web (10) exhibits a portion (40) having the initial height of the profile and a portion (34, 44) of reduced height, **characterised in that** either of the wings (3, 4) and the web (10) are brought together by a weld (33, 43) obtained by friction welding, and which extends over the web substantially in the direction of the length of the girder (1, 2) and substantially solely in the portion of reduced height.

10. A girder according to claim 9, exhibiting in the portion of reduced height (34, 44), a rectilinear edge (31, 41) and an edge (32, 42) at least partially bent or having any other shape, but not aligned with the corresponding edge of the portion of initial height, **characterised in that** the weld (33, 43) follows the edge at least partially bent (32, 42).

11. A process for making a girder for a frame with a reduced number of welds from a single profile exhibiting a web (10) extending on a plane delineated by a height and a length of the girder and at least one wing (3, 4), **characterised in that** in a portion of the profile which must become a portion of reduced height of the girder, the web is cut, **in that** both portions of the web are brought together by bending either of them and **in that** these web portions are brought together by a single weld obtained by friction welding, and which extends over the web substantially in the direction of the length of the girder and substantially solely in the portion of reduced height.
